# EUROPÄISCHE PATENTSCHRIFT

(11) **EP 1 696 289 B1**
(45) Veröffentlichungstag und Bekanntmachung des Hinweises auf die Patenterteilung: **30.09.2009**
(21) Anmeldenummer: 06002873.5
(22) Anmeldetag: 13.02.2006
(51) Int. Cl.: G05B 19/401, B23Q 17/22

(54) **Verfahren zum Vermessen einer programmgesteuerten Werkzeugmaschine**
Method for gauging a machine tool
Procédé pour dimensionner une machine-outil

(30) Priorität: 22.02.2005 DE 102005008055
(43) Veröffentlichungstag der Anmeldung: 30.08.2006
(73) Patentinhaber: DECKEL MAHO Pfronten GmbH, 87459 Pfronten (DE)
(72) Erfinder: Maier, Marzell, 88316 Isny (DE); Kettemer, Rolf, 87616 Leuterschach (DE)
(74) Vertreter: Beetz & Partner

(56) Entgegenhaltungen:
- EP-A- 1 505 464
- DE-A1- 10 048 096
- DE-A1- 10 157 174
- DE-A1- 10 239 694
- DE-A1- 19 858 154

## Beschreibung

Die Erfindung betrifft ein Verfahren zum Vermessen einer programmgesteuerten Werkzeugmaschine unter Verwendung einer Messkugel.

Um den hohen Genauigkeitsanforderungen moderner Werkzeugmaschinen zu genügen, ist es unerläßlich, daß die einzelnen Maschinenkomponenten bereits während des Fertigungsprozesses und auch die gesamte Maschine nach Abschluss ihrer Fertigung genau vermessen wird, damit etwaige Fehler frühzeitig erkannt und ggf. durch entsprechende Korrekturmaßnahmen kompensiert werden können. Auch nach bestimmten Betriebszeiten sind weitere Messungen notwendig, um den Verschleißzustand einzelner Maschinenkomponenten sowie auch durch unsachgemäße Handhabung verursachte Schäden zu erkennen und einzuordnen.

Für die vorgenannten Zwecke sind verschiedene Messverfahren bekannt, um beispielsweise die Pivot-Länge, den Achsversatz eines Spindelkopfes bzw. eines Rund-Drehtisches sowie auch den Durchhang mit Hilfe spezieller Messprogramme erfassen zu können. Zur Durchführung der einzelnen Messvorgänge wird bei Fräs- und Bohrmaschinen ein in die Arbeitsspindel eingespannter Messtaster in Verbindung mit einem geschliffenen Klotz verwendet, der auf dem zu vermessenden Maschinenteil, insbesondere dem Werkstücktisch, festgespannt wird. Diese Messverfahren sind extrem langwierig und erfordern eine Vielzahl von Richt- und Messoperationen. Ein Vermessen der jeweiligen Maschine durch Personal des Betreibers am Betriebsort ist in der Regel nicht möglich. Vielmehr müssen die Messungen und Richtarbeiten in den Inspektionsintervallen oder nach besonderen Betriebsereignissen von speziell ausgebildetem Fachpersonal des Herstellers durchgeführt werden, was mit einem hohen Aufwand verbunden ist.

Zum Vermessen der rotativen Achsen einer Fräsmaschine, beispielsweise von Fräsköpfen unterschiedlicher Bauarten, ist ein als FIDIA-Kopf-Messsystem bezeichnetes Verfahren bekannt geworden, bei dem ein spezielles Kalibrier- und Messgerät eingesetzt wird. Mit diesem bekannten Messverfahren kann eine Positionsfehlerkompensation der beiden Rundachsen ebenso wie deren automatische Nullpunktermittlung vorgenommen werden. Daneben ist auch eine Überprüfung der Rotationsebenenparallelität der Rundachsen in Bezug auf die Linearachsen sowie eine erweiterte volumetrische Kompensation möglich. Das zur Durchführung dieses Verfahrens erforderliche Kalibrier- und Messgerät besitzt einen auf dem Maschinenteil, z.B. dem Maschinentisch, spannbaren Ständer mit drei um 120° winkelversetzten vertikalen Streben, an deren oberem Ende Messfühler unter einem vorgegebenen Schrägwinkel positioniert sind. In die Arbeitsspindel der Maschine ist ein Messwerkzeug eingespannt, das einen zylindrischen Schaft und eine Messkugel an seinem freien Ende aufweist. Diese Messkugel wird durch entsprechende Verfahrbewegungen der Arbeitsspindel so positioniert, dass alle drei Messtaster mit der Kugeloberfläche in Kontakt sind. Auch dieses bekannte Messverfahren ist mit einem gewissen Aufwand verbunden, da zu seiner Durchführung relativ komplex ausgebildete Kalibrier- und Messgeräte erforderlich sind.

In der DE 31 32 383 C ist eine Vorrichtung und ein Verfahren zur Überprüfung der Messgenauigkeit von Koordinatenmessgeräten beschrieben. Zwei mit hoher Oberflächengüte genau bearbeitete Messkugeln sind auf einem gemeinsamen Träger in veränderbarem Abstand angeordnet und entlang eines Messstrahls mit Bohrungen versehen. Änderungen des Zwischenabstands der beiden Kugeln werden mittels einer Interferometeranordnung gemessen, wobei der Ausgangsabstand beider Messkugeln genau bekannt sein muss. Die räumliche Lage der beiden Messkugeln kann vom Koordinaten-Messgerät durch eine Vielpunkt-Abtastung ermittelt werden. Ein Steuerrechner erfasst und vergleicht die laserinterferometrisch ermittelten Abstandwerte der Messkugeln und die Messwerte des Koordinaten-Messgeräts bei der Kugelabtastung. Das Vermessen von Werkzeugmaschinen insbesondere der Rundachsen ist nicht möglich.

Aus der EP 1 505 464 A ist ein Verfahren zur Genauigkeits-Selbst-überprüfung einer Hochpräzisions-Werkzeugmaschine bekannt, bei dem in einer definierten Position auf dem Maschinentisch ein Kalibrierwerkstück bekannter Dimensionen aufgespannt wird, das Bohrungen, Stufen oder ähnliche Konturen mit bekannten Abmessungen aufweist. Eine zuvor kalibrierte Messeinrichtung tastet das aufgespannte Kalibrierwerkstück mit Hilfe eines Messprogramms ab, wobei die Messwerte in einer Tabelle der Maschinensteuerung abgelegt werden. Eine Auswertung der Abweichungen erfolgt durch Vergleich der aktuellen Messwerte mit abgelegten Sollmesswerten.

In der DE 101 39 694 A ist ein Verfahren zur Kalibrierung eines Fräsers mit kreissegmentförmiger Fräserstirn beschrieben. Der Stabfräser wird so in der Bohrung einer größeren Kugel befestigt, dass beide Mittelpunkte zusammenfallen. Mit der die Fräserstirn umgebenden Kugel wird ein Kalibrierkörper abgetastet und aus den erfassten Werten kann die Lage des Mittelpunktes der Fräserstirn ermittelt werden.

Aus der DE 100 48 096 A ist ein Verfahren zur Kalibrierung eines Messsensors auf einem Koordinatenmessgerät bekannt, bei dem der Sensor eine Kalibrierkugel abtastet. Mittels eines ersten Parameterfeldes wird das Sensorkoordinatensystem in ein Maschinenkoordinatensystem transformiert. Ein zweites Parameterfeld beschreibt die Ablage des Sensorkoordinatensystems gegenüber einem Punkt im Maschinenkoordinatensystem.

Aufgabe der Erfindung ist es, ein Verfahren zum Vermessen einer programmgesteuerten Werkzeugmaschine aufzuzeigen, das mit nur geringem technischem Aufwand ein schnelles und hochgenaues Vermessen verschiedener Maschinenkomponenten vor und ggf. auch während des Maschinenbetriebs ermöglicht.

Diese Aufgabe wird erfindungsgemäß durch die im Patentanspruch 1 angegebenen Maßnahmen gelöst.

Das Positionieren der hinsichtlich ihrer Abmessungen vorbekannten Messkugel an einem ausgewählten Maschinenteil kann auf einfache Weise dadurch erfolgen, dass ein konstruktiv einfacher Halter, z.B. in Form eines Stabes, an der Messkugel befestigt wird und dieser Halter dann mit Hilfe herkömmlicher Spannmittel an dem Maschinenteil fixiert wird. Nach dem Fixieren der Messkugel an dem Maschinenteil erfolgt deren Lagebestimmung mit Hilfe eines in herkömmlicher Weise ausgebildeten Messtasters, der beim Ausmessen einer Fräsmaschine in deren Arbeitsspindel eingespannt ist. Der Messtaster wird in eine vom Bediener abgeschätzte Ausgangsposition verfahren, in welcher er sich etwa 5 bis 20 mm oberhalb des Scheitelbereichs der Messkugel befindet. Daraufhin wird das in die Programmsteuerung der Maschine integrierte Messprogramm gestartet. Während dieses Programmablaufs wird der Messtasters wiederholt vorzugsweise vertikal mit aufeinanderfolgender seitlicher Versetzung verfahren, bis er verschiedene Punkte auf der Kugeloberfläche kontaktiert. Die jeweilige Lage dieser Oberflächenpunkte wird erfasst und aus diesen Werten wird die Raumlage des Kugelmittelpunkts anhand allgemein bekannter geometrischer Beziehungen berechnet. Durch Verwendung der Messkugel als Messkörper wird eine wesentliche Vereinfachung der notwendigen Messvorgänge erreicht, weil aufgrund der ja festliegenden geometrischen Beziehungen einer Kugel durch die einfache Vermessung der Kugeloberfläche Raumdaten erhalten werden, was erhebliche Vorteile gegenüber den in der Regel nur zweidimensional arbeitenden herkömmlichen Messverfahren bietet. So können bei der erfindungsgemäßen Vorgehensweise Lageabweichungen eines Punktes nicht nur in der horizontalen Ebene, sondern zusätzlich auch in der Vertikalen erfasst werden, und zwar aufgrund der vorgegebenen geometrischen Beziehungen zwischen dem Mittelpunkt und der Außenfläche einer Kugel.

Um Lageabweichungen von Rundachsen und Linearachsen einer Maschine einzeln oder auch gemeinsam zu erfassen, wird das erfindungsgemäße Verfahren so durchgeführt, dass nach der ersten Bestimmung der Raumposition des Kugelmittelpunkts der jeweilige Maschinenteil, auf welchem die Messkugel über ihren Halter fixiert ist, um eine vorbestimmte Strecke verfahren wird. In der dadurch erhaltenen zweiten Position erfolgt eine nochmalige Bestimmung der Raumposition des Kugelmittelpunkts in der neuen Lage durch punktuelles Abtasten der Kugeloberfläche. Da die Größe der Fahrstrecke des bewegten Maschinenteils bekannt ist, können die im ersten und zweiten Messzyklus ermittelten Raumpositionen des Kugelmittelpunkts mit entsprechenden Sollwerten aus der Maschinensteuerung verglichen werden, um dadurch Lageabweichungen zu bestimmen.

Zum Vermessen der Raumlage einer Drehachse, beispielsweise eines Schwenk-Rundtisches, eines Teilapparats, od. dgl. wird zweckmäßigerweise der Maschinenteil mit der daran fixierten Messkugel aus einer ersten Messstellung in eine zweite Messstellung um die gemeinsame Drehachse um einen vorbestimmten Winkel verschwenkt, wobei in der ersten und auch in der zweiten Messstellung die Raumlage des Kugelmittelpunktes in der vorstehend erörterten Weise bestimmt wird. Da die Messkugel selbst und auch die radiale Länge des Messkugelhalters bekannt sind, kann durch diese zweifache Messung der Raumlage des Kugelmittelpunktes die Lage des Drehzentrums der jeweiligen Achse genau berechnet werden. Diese Vorgehensweise ist besonders vorteilhaft bei Verwendung von demontierbaren NC-Teilapparaten, deren Position und Ausrichtung auf dem Tisch bisher lediglich mit Hilfe der dafür vorgesehenen Nutensteine bestimmt wurde, was zu Ungenauigkeiten und zu Taumelbewegungen einer Drehachse um eine Haupt-Koordinatenachse führte.

Kalibrierkugeln mit geradlinigen oder auch gekröpften Haltern sowie verschiedenartigen Befestigungselementen sind in unterschiedlichen Ausführungen erhältlich und lassen sich für jeden Maschinentyp individuell zusammenbauen.

Mit dem erfindungsgemäßen Verfahren können durch den Einsatz der Kalibrier- bzw. Messkugeln alle Rundachsen einer Werkzeugmaschine mit nur einem Messtaster vermessen werden, weil mit nur einer Kalibrierkugel nicht nur das Drehzentrum aus axialer Rundachsrichtung, sondern auch aus radialer Richtung genau erfasst werden kann. Drehzentren dieser Achsen konnten bisher mit Hilfe von Messtastern nicht exakt nachgemessen werden. Neben der Ermittlung des Drehzentrums kann durch das erfindungsgemäße Verfahren auch das Taumeln der Rundachse gemessen werden, wobei eine Erweiterung des Messprogramms die Ermittlung des Taumelns der Achse separat um beide Ebenen ermöglicht. Bei Universal-Fräs- und Bohrmaschinen mit C-Achse, d.h. mit NC-Rundtisch, wird mittels des erfindungsgemäßen Verfahrens ein horizontales Messen möglich, so dass eine Kontrolle der Maschinenkinematik auch bei aufgespannten sperrigen Werkstücken erfolgen kann.

Ein wesentlicher Vorteil bei dem erfindungsgemäßen Messverfahren besteht noch darin, dass die Kalibrier- und Messkugel durch Verwendung verschiedener geeigneter Halterungen nahezu beliebig im Raum an einem ausgewählten Maschinenteil positioniert werden kann, wobei eine genaue Positionierung der Halterungen auf dem jeweiligen Maschinenteil nicht erforderlich ist. Zur Befestigung der Halterungen auf dem Maschinenteil können neben mechanischen Mitteln auch geeignete Magnethalter verwendet werden.

Das erfindungsgemäße Messverfahren wird im folgenden anhand einiger in der Zeichnung schematisch dargesteller Anwendungsfälle ausführlicher beschrieben. Es zeigen:
- Fig. 1: das Vermessen des Drehzentrums eines Teilapparates in schematischer Stirnansicht;
- Fig. 2: den Teilapparat nach Fig. 1 in schematischer Draufsicht;
- Fig. 3: eine Verfahrensdurchführung mit einer an einem schrägen Halter befestigten Messkugel;
- Fig. 4: eine Verfahrensdurchführung zum Vermessen einer horizontalen Drehachse;
- Fig. 5: eine Verfahrensdurchführung mit einem Schwenkkopf; und
- Fig. 6: eine Verfahrensdurchführung mit einem schwenkbaren Rundtisch.

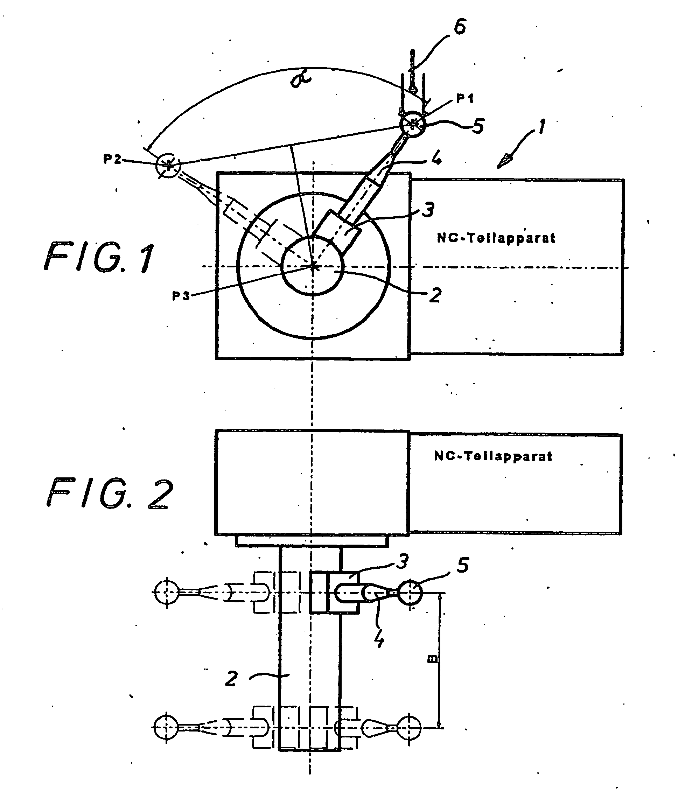

Fig. 1 zeigt einen Teilapparat 1, der auf einer beliebigen Stelle eines - nicht dargestellten - Werkstücktisches festgespannt worden ist. Das Drehzentrum P3 des Teilapparates soll bestimmt werden. Zu diesem Zweck wird auf einer Welle 2 ein Halter 3 z.B. durch Magnetkraft befestigt, mit dem ein konischer Zylinderstift 4 radial fest verbunden ist. Am Ende dieses Stiftes 4 ist eine extrem genau bearbeitete Messkugel 5 bekannter Größe befestigt.

Zu Beginn eines Messvorganges wird ein in der Arbeitsspindel der Fräsmaschine eingespannter Messtaster 6 in eine Ausgangsposition verfahren, in welcher der Kopf des Messtasters 6 sich etwa 10 mm oberhalb des Scheitelbereichs der Messkugel 5 befindet. Aus dieser Ausgangsposition wird die Spindel vertikal nach unten verfahren, bis der Kopf des Messtasters 6 die Kugeloberfläche berührt. Da der Kugeldurchmesser bekannt ist, kann mit Hilfe der Messwerte die Raumlage P1 des Mittelpunkts P1 der Kugel berechnet werden. Anschließend wird die Welle 2 des Teilapparats um einen Winkel α gedreht, so dass die radial ausgerichtete Halterung 3, 4 zusammen mit der Kugel 5 in die in Fig. 1 in Strichlinien dargestellte Position gelangt. In dieser Position wird die Messkugel erneut mit Hilfe des Messtasters 6 wiederholt abgetastet, und aufgrund der erhaltenen Messwerte wird die Raumlage P2 des Kugelmittelpunktes bestimmt. Da die Länge der Halterung 3, 4 bekannt ist, kann aufgrund der ermittelten Raumlagen P1, P2 des Kugelmittelpunktes das Drehzentrum P3 berechnet werden.

Bei der in Fig. 2 dargestellten Messanordnung wird nach dem ersten vorstehend beschriebenen Messvorgang der Halter auf der Welle 2 um die Strecke B axial verschoben, woraufhin der oben beschriebene Messvorgang wiederholt wird. Auf diese Weise kann ein Taumeln der Welle 2 erfasst werden.

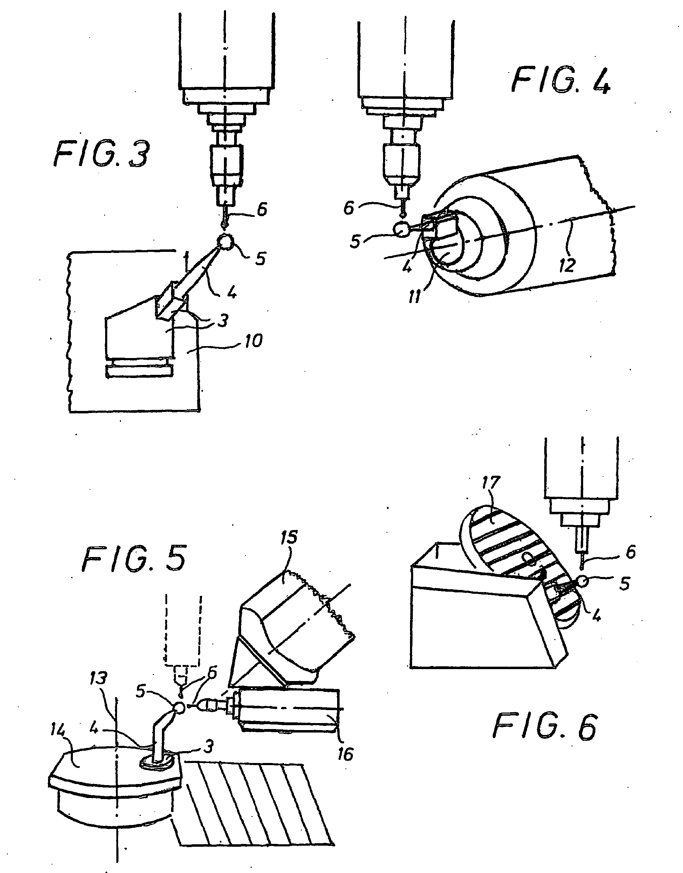

Bei den in den Figuren 3 bis 6 dargestellten Anwendungsfällen vollzieht sich der Ablauf der jeweiligen Messungen in der vorstehend beschriebenen Weise. Durch mehrfaches Abtasten der Kugel wird die Raumlage des Kugelmittelpunktes erfasst. Die jeweils erhaltenen Messwerte und auch die errechneten Raumlagen der Kugelmittelpunkte werden in einem speziellen Unterprogramm der Maschinensteuerung abgelegt, die auch die jeweils erforderlichen Berechnungen ausführt.

Wie aus den Figuren 3 bis 6 ersichtlich, kann die Messkugel an verschiedenartigen Haltern befestigt sein, deren jeweilige Abmessungen bekannt sind. Durch Verwendung eines geeigneten Halters können unterschiedliche Maschinenteile, insbesondere hinsichtlich der Raumlage ihrer Drehzentren, auf einfache Weise vermessen werden. So wird in Fig. 1 ein Schräghalter 3, 4 für die Messkugel 7 verwendet, der auf einem translatorisch verfahrbaren Werkstücktisch 10 aufgespannt ist.

Nach Fig. 4 ist die Halterung 3, 4 der Messkugel 5 an einem Spannfutter 11 außermittig befestigt, das um eine horizontale Achse 12 motorisch dreht.

Nach Fig. 5 wird ein gekröpfter Halter 3, 4 verwendet, der auf einem um die Vertikalachse 13 verdrehbaren Werkstücktisch 14 aufgespannt ist.

Der Messtaster ist in eine Arbeitsspindel 16 eingespannt, die mittels eines Schwenkkopfes 15 aus ihrer in Voll-Linien dargestellten Horizontalstellung in die in Strichlinien angedeutete Vertikalstellung geschwenkt werden kann.

Gemäß Fig. 6 ist auf einem um eine Horizontalachse motorisch schwenkbarem Rundtisch 17 der Halter 4 mit der Messkugel aufgespannt. Durch die erfindungsgemäßen Messungen kann die Schwenkachse des Rundtisches und auch seine durch die Mitte verlaufende Drehachse vermessen werden.

Das erfindungsgemäße Verfahren erfordert keine gesonderten Messvorrichtungen und kann auch von gering geschultem Personal innerhalb kürzester Zeiten durchgeführt werden. Dies bietet den besonderen Vorteil, dass die Vermessung der Maschine auch vor Ort, d.h. beim Benutzer, durchgeführt werden kann, wodurch sich die herstellerseitigen Inspektionsarbeiten erheblich vereinfachen und eventuelle Fehler frühzeitig erkannt werden können.

## Patentansprüche

1. Verfahren zum Vermessen einer programmgesteuerten Werkzeugmaschine, insbesondere zur Kontrolle der Maschinenkinematik, unter Verwendung einer Messkugel,
mit den folgenden Verfahrensschritten
- Positionieren einer Messkugel (5) an einem Maschinenteil (2),
- Verfahren eines an der Maschine installierten Messtasters (6) in eine gewählte Ausgangsstellung,
- mehrfaches Verfahren des Messtasters (6) bis zum Kontakt mit verschiedenen Punkten auf der Oberfläche der Messkugel (5),
- Erfassen der Lage der kontaktierten Oberflächenpunkte auf der Messkugel (5),
- Berechnen der Raumlage (P1) des Mittelpunkts der Messkugel (5) auf der Grundlage der erfassten Messwerte,
- Verfahren des Maschinenteils (2) mit der daran fixierten Messkugel (5) aus der ersten Messstellung um eine vorbestimmte Strecke (α, B) in eine zweite Messstellung,
- Bestimmen der Raumlage (P2) des Kugelmittelpunkts durch erneutes punktuelles Abtasten der Kugeloberfläche und
- Bestimmen einer Lageabweichung durch Vergleich der erfassten Ist-Werte der Raumlage (P2) des Kugelmittelpunkts mit entsprechenden sich aus der vorgegebenen Fahrstrecke ergebenden Soll-Werten aus der Programmsteuerung.

2. Verfahren nach Anspruch 1,
**dadurch gekennzeichnet, dass**
zum Vermessen der Raumlage einer Drehachse der Maschinenteil (2) mit der Messkugel (5) aus der ersten Messstellung in die zweite Messstellung um einen vorbestimmten Winkel α verschwenkt wird.

## Claims

1. A method for gauging a program-controlled machine tool, in particular for controlling the machine kinematics, by using a measuring sphere,
comprising the method steps of
- positioning a measuring sphere (5) on a machine part (2),
- moving a sensing element (6) installed in the machine tool to a selected starting position,
- repeatedly moving the sensing element (6) until it comes into contact with various points on the surface of the measuring sphere (5),
- detecting the spatial position of the contacted surface points on the measuring sphere (5),
- calculating the position (P1) of the center of the measuring sphere (5) on the basis of the detected measurement values,
- moving the machine part (2) with the measuring sphere (5) attached to it by a predetermined distance (α, B) from the first measuring position to a second measuring position,
- determining the spatial position (P2) of the center of the sphere by point sampling of the surface of the sphere again, and
- determining a positional deviation by comparing the detected actual values of the spatial position (P2) of the center of the sphere with corresponding target values from the program controller which result from the predetermined travel distance.

2. The method according to claim 1,
**characterized in that**
the machine part (2) with the measuring sphere (5) is pivoted by a predetermined angle (α) from the first measuring position to the second measuring position in order to gauge the spatial position of an axis of rotation.

## Revendications

1. Procédé de mesure d'une machine outil à commande numérique, notamment pour le contrôle des mécanismes de la machine, utilisant une touche à bille,
comprenant les étapes de procédé suivantes
- positionnement d'une touche à bille (5) sur une pièce de la machine (2),
- déplacement d'un palpeur de mesure (5) installé sur la machine en une position de départ choisie,
- déplacements multiples du palpeur de mesure (6) jusqu'à venir en contact avec différents points sur la surface de la touche à bille (5),
- détection de la position des points superficiels ayant été contactés sur la touche à bille (5),
- calcul de la position spatiale (P1) du centre de la touche à bille (5) sur la base des valeurs de mesure détectées,
- déplacement de la pièce de la machine (2) avec la touche à bille (5), qui y est fixée, depuis la première position de mesure en une deuxième position de mesure sur une distance prédéterminée (α, B),
- détermination de la position spatiale (P2) du centre de la bille par une nouvelle palpation ponctuelle de la surface de la bille et
- détermination d'un écart de position en comparant les valeurs réelles détectées de la position spatiale (P2) du centre de la bille avec les valeurs de consigne correspondantes, résultant de la distance de déplacement prédéterminée, à partir de la commande numérique.

2. Procédé selon la revendication 1,
**caractérisé en ce que**
pour la mesure de la position spatiale d'un axe de rotation, la pièce de la machine (2) avec la touche à bille (5) est basculée selon angle prédéterminé (α) depuis la première position de mesure vers la deuxième position de mesure.
